# EUROPEAN PATENT SPECIFICATION

(11) **EP 4 012 404 B1**
(45) Date of publication and mention of the grant of the patent: **12.03.2025**
(21) Application number: 21212897.9
(22) Date of filing: 07.12.2021
(51) Int. Cl.: G01N 30/88

(54) **AUTOMATED TEST MIX FOR GAS CHROMATOGRAPH/GAS CHROMATOGRAPHY-MASS SPECTROMETRY HEALTH AND DIAGNOSTICS**
AUTOMATISIERTE TESTMISCHUNG FÜR GASCHROMATOGRAPHEN-/GASCHROMATOGRAPHIEMASSENSPEKTROMETRIEGESUNDHEIT UND -DIAGNOSE
MÉLANGE DE TEST AUTOMATIQUE DE SANTÉ ET DE DIAGNOSTIC DE CHROMATOGRAPHE EN PHASE GAZEUSE/SPECTROMÉTRIE DE MASSE CHROMATOGRAPHIQUE À GAZ

(30) Priority: 08.12.2020 US 202017115760
(43) Date of publication of application: 15.06.2022
(73) Proprietor: Thermo Finnigan LLC, San Jose, CA 95134 (US); Thermo Fisher Scientific (Bremen) GmbH, 28199 Bremen (DE)
(72) Inventor: SHINHOLT, Deven L., Austin, 78728 (US); McCAULEY, Edward B., Austin, 78728 (US); FACCHETTI, Riccardo, 20090 MILANO (IT); GUZZONATO, Antonella, 28199 Bremen (DE)
(74) Representative: Boult Wade Tennant LLP

(56) References cited:
- WO-A1-2013/062624
- WO-A1-2015/200019
- WO-A2-2010/065810
- US-A1- 2013 295 597
- US-A1- 2020 158 697

## Description

### TECHNICAL FIELD

The present disclosure is directed generally to the performance of maintenance evaluations on a gas chromatograph (GC) or a gas chromatograph-mass spectrometer (GC-MS). More particularly, the present invention relates to systems and methods enabling the automated performance of GC/GC-MS health and diagnostics evaluations and reporting, including systems and methods for generating maintenance recommendation reports based on the health and diagnostics evaluations.

### BACKGROUND

Analytical or scientific instrument systems such as gas chromatographs or gas chromatograph-mass spectrometers may be used in connection with sample analyses. In connection with such instrument systems, scheduled diagnostic and maintenance activities may be performed according to a predetermined schedule. For instance, regularly scheduled instrument diagnostics testing may be required, followed by any necessary maintenance of the instrument system as determined by the diagnostics testing to proactively clean, replace, or perform other activities on the various parts or components of the instrument system to correct malfunctions or otherwise to ensure proper function going forward.

Health and diagnostic testing procedures are commonly performed manually to ensure that the instrument system's performance is acceptable before or after completion of maintenance. Such manual testing may have drawbacks. Typically, a highly skilled and qualified technician is required to perform such maintenance and testing. Additionally, the manual testing may be inconsistently performed across serviced instruments thereby leading to inconsistent results regarding instrument performance after completion of the scheduled maintenance. Furthermore, performing the testing manually as well as gathering and analyzing test results manually may be time consuming, cumbersome, and error prone.

WO-A-2015/200019 discloses a method for monitoring a chromatograph used to control production of a chemical product. The method involves sampling a chemical mixture of chemical components used during the production to form the chemical product, measuring the composition of the sample with a chromatograph and adjusting the amount of the chemical components based on the measured composition. The method also involves measuring actual parameters of the sample with at least one gauge, determining expected parameters of the sample based on the measured composition and the measured actual parameters using an equation-of-state, and detecting a fault in the chromatograph by comparing the expected parameters with the actual parameters.

### BRIEF SUMMARY

The disclosure is directed to a novel method and apparatus which provides performance of maintenance evaluations on GC/GC-MS instrument systems. More particularly, the present invention relates to systems and methods enabling the automated performance of GC/GC-MS health and diagnostics evaluations and reporting, including systems and methods for generating maintenance recommendation reports based on the health and diagnostics evaluations.

In accordance with the concepts described herein, one scientific instrument for providing performance of maintenance evaluations on GC/GC-MS instrument systems is described in accordance with claim 1.

In some versions, a controller can be operatively coupled with the material analysis chamber, the injector, and the data processor. The controller can be configured to receive a first command via a user input feature, and upon receiving the first command at the user input feature, autonomously direct the injector to inject the at least one diagnostic material sample into the material analysis chamber. The controller can further initiate the scientific analysis to formulate the first set of results, direct the data processor to analyze the first set of results and to generate the first set of compared results, and direct the data processor to generate a first output report illustrating the first set of compared results.

The invention also extends to a method of performing a diagnostic evaluation of a scientific instrument in accordance with claim 10.

As such, the systems and methods disclosed can provide improved automated diagnostics and reporting for gas chromatograph systems, gas chromatography-mass spectrometry systems, or for other systems of chromatography.

The foregoing has outlined rather broadly the features and technical advantages of the present disclosure in order that the detailed description that follows may be better understood. Additional features and advantages will be described hereinafter which form the subject of the claims. It should be appreciated by those skilled in the art that the conception and specific embodiment disclosed may be readily utilized as a basis for modifying or designing other structures for carrying out the same purposes. The novel features which are believed to be characteristic of the disclosed systems and methods, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawings, in which:
**FIG. 1** depicts a prior art GC-MS instrument system;
**FIG. 2** depicts a cross-sectional view of a first exemplary injector arrangement of a GC/GC-MS instrument, showing the injector retrieving a diagnostic sample material from one vial of a plurality of vials;
**FIG. 3** depicts a cross-sectional view of a second exemplary injector arrangement of a GC/GC-MS instrument, showing the injector retrieving a diagnostic sample material from a material reservoir that is fluidly coupled with the injector; and
**FIG. 4** depicts a flow chart of an exemplary method of performance of maintenance evaluations on a GC/GC-MS instrument systems.

### DETAILED DESCRIPTION

In the description herein, it is understood that a word appearing in the singular encompasses its plural counterpart, and a word appearing in the plural encompasses its singular counterpart, unless implicitly or explicitly understood or stated otherwise. Furthermore, it is understood that for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the disclosure. Also, reference numerals may be repeated among the various figures to show corresponding or analogous elements. Additionally, it will be understood that any list of such candidates or alternatives is merely illustrative, not limiting, unless implicitly or explicitly understood or stated otherwise. In addition, unless otherwise indicated, numbers expressing quantities of ingredients, constituents, reaction conditions and so forth used in the specification and claims are to be understood as being modified by the term "about."

Accordingly, unless indicated to the contrary, the numerical parameters set forth in the specification and attached claims are approximations that may vary depending upon the desired properties sought to be obtained by the subject matter presented herein.

Numerous types of scientific instruments exist for the compositional analysis of fluids, including liquids and gasses. Although the invention will be described with regard to the compositional analysis of fluids in GC/GC-MS applications, it can be extended to apply to the other related applications. For example, liquid chromatography (LC) and liquid chromatography-mass spectrometer (LC-MS) applications.

GC-MS is a technique to determine the quantity and identity of components in an analyte. The analyte is injected into a gas chromatograph which separates the mixture into its individual components, and the output from the gas chromatograph may be fed into a mass spectrometer which determines the molecular formula of each component (each referred to herein as a "scientific analysis"). The mass spectra of each component can often be compared against a known library of mass spectra of known compounds. GC-MS is frequently used in analysis of environmental contaminates, food safety, forensics, toxicology, and metabolomics.

In typical procedures for evaluating, diagnosing, or troubleshooting the health of GC/GC-MS instrument systems, a user manually inputs a standardized diagnostic material sample into the instrument and reviews the results. Thereafter, the user determines what maintenance activities are necessary, if any. End-to-end automation of a full-system evaluation of a GC/GC-MS instrument, along with the automatic generation of reports and recommendations for maintenance, is needed to increase the operative efficiency of the lab and reduce the specialized skills and costs associated with the routine, manual evaluations. If the injection, processing, post-processing analysis, and reporting of the results are seamlessly automated by the instrument, the instrument would only require a single input mechanism, such as a push-button accessible by a user or a pre-scheduled or other software-based triggering condition, to initiate the testing and generate recommendations for maintenance on the instrument.

To enable the end-to-end evaluations to run autonomously, individual compounds in one or more diagnostic material samples are pre-loaded into the instrument and formulated to test different aspects of chromatography, such as contamination in the inlet or guard column, active sites, degradation of stationary phase, or other aspects of the instrument which may typically require maintenance. For example, when a GC instrument is used to repeatedly test analytical samples, various components along the sample pathway can degrade over time, which can gradually impact performance of the instrument. Many factors can lead to this damage, such as thermal degradation, buildup of non-volatile compounds, oxidation from leaks, physical or chemical damage to surfaces, septum coring, etc. The injected sample potentially touches multiple surfaces from injection, volatilization, separation, and eventual detection. Ultimately, this damage along the flow path leads to active sites, which interact with the injected compounds to be analyzed. This unwanted interaction can manifest in various ways, such as peak tailing, peak fronting, peak broadening, compound reactions, and analyte suppression.

The typical strategy for performing an analysis using a diagnostic test mix is to have a variety of compound types formulated to evaluate specific aspects of the instrument system. The various properties of these compound types allow for the evaluations to determine where specific instrument component wear (health monitoring) is occurring and to recommend specific maintenance steps needed to bring the instrument system back to a healthier status. For example, the below is a listing of potential test mix components and how they can be utilized to evaluate system health.

**Table 1: Traditional Diagnostic Test Mix Components**

| **Compound Type** | **Example(s)** |
|---|---|
| Acids | 2-Ethylhexanoic acid |
| | 2,6-Dimethylphenol |
| Bases | 2,6-Dimethylaniline |
| | Dicyclohexylamine |
| Hydroxyl Compounds | 1-Octanol |
| | 2,3-Butanediol |
| | 1-Nonanal |
| Fatty Acid Methyl Esters | Methyl decanoate |
| | Methyl undecanoate |
| | Methyl dodecanoate |
| Hydrocarbons | n-Decane |
| | n-Undecane |

Particularly, acids and bases generally identify the presence of acid and base activation sites, which can specifically bind compounds based on alkalinity. Hydroxyl compounds (alcohols) may be useful for identifying active sites due to their polarity and potential for hydrogen bonding, which can make them useful for identifying oxidative damage or exposed glass, such as from broken column pieces. Alcohols may be particularly sensitive to adsorption sites when compared to most other polar compounds. Fatty acid methyl ester compounds (FAMEs) can be useful for quantitating the film thickness of a column. However, there may in some instances be limited application for this for assessing column health. Hydrocarbons are non-polar compounds and can be generally immune to most active sites. In this application, they can be useful as an internal standard as their intensity can be measured relative to the other peaks in the mix.

In general, the traditional test mix of the components listed in Table 1 may be a useful starting point for validating chromatography health, though the listed components merely represent one example and diagnostic test mix samples are in no way limited to the compounds of Table 1. For instance, inlet reactivity can be identified with endrin or 4,4'-DDT. As another example, DFTPP (Decafluorotriphenylphosphine) may be a useful compound for evaluating MS performance if an MS is coupled to the GC as a detector. Different test mixes may also be tailored to a specific application. System performance check compounds are useful for evaluating performance relative to specific analysis methodology. An alternative approach may be to replicate the manufacturer's test data for each column.

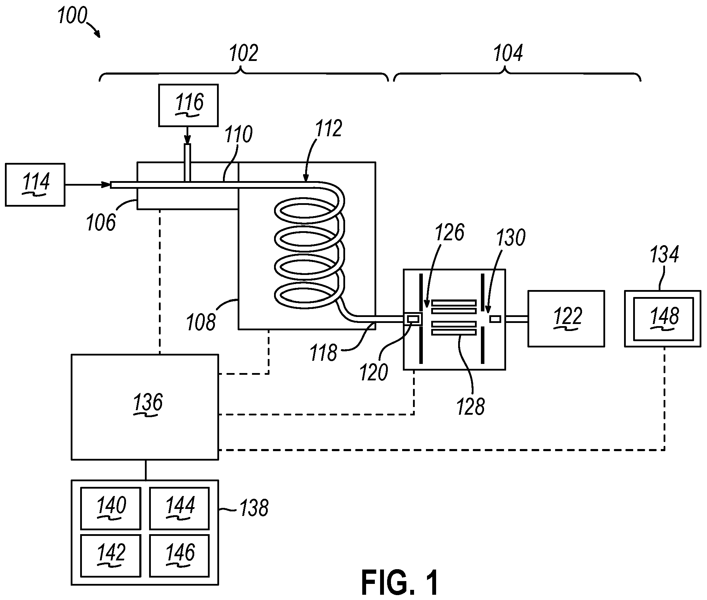

Referring now to the drawings, FIG. 1 is a typical GC-MS instrument system 100. While a GC-MS instrument system is referenced herein, it should be understood that the inventive systems and methods of this disclosure may be applicable to either a GC instrument system or a GC-MS instrument system. It should also be understood that many different variations of both GC and GC-MS instrument systems exist, and the description herein is only intended to introduce a GC-MS instrument system at a high level. One exemplary GC instrument which may be utilized with the systems and methods described herein is the TRACE 1300 Series Gas Chromatograph manufactured by Thermo Fisher Scientific. Some examples of exemplary GC-MS instruments which may be utilized with the systems and methods described herein are the ISQ 7000 Mass Spectrometer and the TSQ 9000 Mass Spectrometer, each manufactured by Thermo Fisher Scientific.

GC-MS instrument system 100 includes a gas chromatograph 102 and a mass spectrometer 104. Gas chromatograph 102 further includes an injector port 106 positioned adjacent to and fluidly coupled to an oven 108 via a tube 110. Particularly, tube 110 fluidly couples with a gas chromatograph column 112. To perform a scientific analysis within the column 112, a material sample 114, typically in the form of a liquid, is injected into injector port 106 along with a carrier gas, or mobile phase, 116. Thereafter, column 112 of oven 108 separates material sample 114 into its individual components, which then travels through the exit port 118, typically in the form of a gas. As the gas exits oven 108 at exit port 118, it may optionally be input into mass spectrometer 104. Mass spectrometer 104 may be, for example, a quadrupole-based instrument system, ion trap, time-of-flight, or any other known and commonly used instrument system for mass spectrometry. A typical quadrupole-based instrument system includes an ionization chamber 120, a source slit 126, a set of quadrupole rods 128, an exit slit 130, and a detector 122. Ion optics, ion guides, and other mass-resolving devices may exist between the ionization chamber 120 and the detector 130. In its most basic form, the gas enters ionization chamber 120, it is ionized and the particles accelerated through source slit 126, through quadrupole rods 128, and through exit slit 130 before reaching detector 122. Detector 122 then detects the particles as they are received, before analysis is done via a data processor 134 using known data stored in memory 148 to determine the molecular formula of each component.

While data processor 134 is illustrated as associated with detector 122 of mass spectrometer 104, it should be understood that data processor 134 may also be associated with a detector (not shown) at exit port 118 of gas chromatograph for separately analyzing the components of the materials traveling therethrough. Examples of typical gas chromatograph detectors are flame ionization detectors, thermal conductivity detectors, or the like. Further, while memory 148 is illustrated as being associated with data processor 134 for storing known data, memory 148 may be included in controller 136 alternative to or in addition to being located in data processor 134, and memory 148 may be configured to store data sets generated by GC/GC-MS runs and evaluations for later use to develop and report data trends. For example, each time an evaluation is performed and the resulting data is generated, that data set may be stored for comparison against data collected during a second or later evaluation.

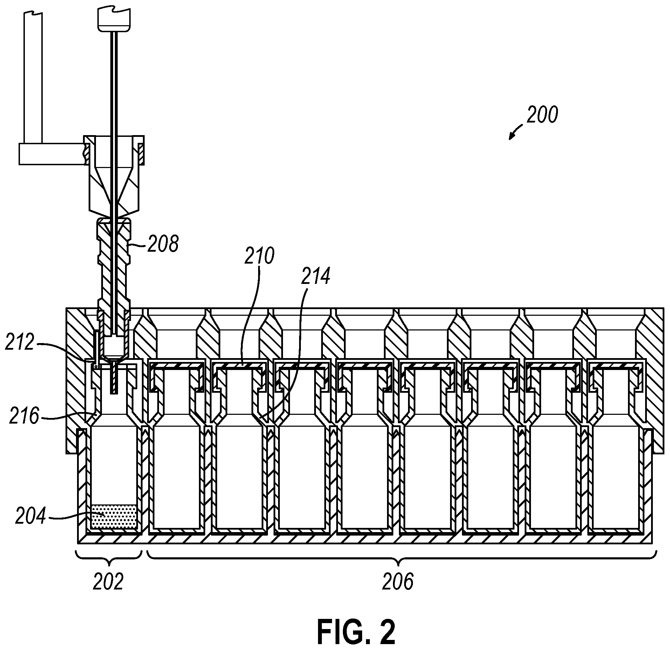

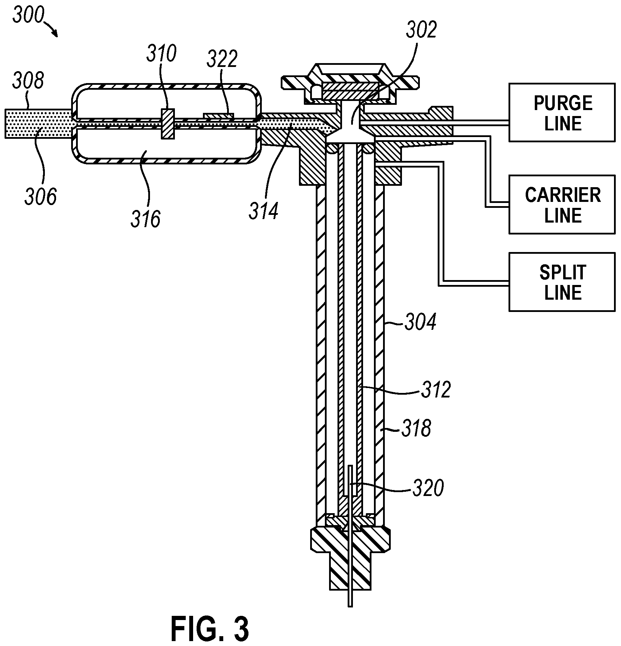

To operate each of the components and the procedures described above, GC-MS instrument system 100 may further include a controller 136 comprised of specialized computer processing equipment having software and hardware configured for operating GC-MS instrument system 100. As such, controller 136 may be operatively coupled (as shown by the dashed lines), such as using electrical and/or data cables, with each and every component of system 100, including but not limited to injector port 106 (including injectors 208 and 304 of FIGS. 2 and 3, respectively), oven 108, ionization chamber 120, and data processor 134. A user control device 138 may also be operatively coupled with controller 136 via electrical and/or data cables. User control device 138 may include a first user input feature 140, such as a push-button (whether physical or digital) or any other commonly used user input features, along with one or more additional user input features 142. First user input feature 140 may be actuated by a user to initiate a full-system evaluation of a GC/GC-MS, while other user input features 142 may be utilized for other common uses known in the art. Alternatively, an automatic software-based schedule may be predetermined by a user to initiate a system evaluation instead. As used herein, "user input feature" shall describe any hardware or software feature accessible by a user to activate or schedule for later activation a system evaluation. User control device 138 may also include a visualization display screen 144 allowing the user to view and manipulate output reports, maintenance recommendations, and otherwise view important data associated with the operations of the GC/GC-MS instrument system. User control device 138, or controller 136, may still further include a wireless transmitter 146 that is configured and selectively operable to transmit notifications to a user. Notifications can include system evaluation reminders, start/stop notifications, progress notifications, evaluation reports, error reports, maintenance recommendations, or any other notification which may prove useful to a user. Wireless transmitter 146 may be configured for example, to communicate via broad spectrum radio, Zigbee, microwave radio, WiFi, Bluetooth, cellular, satellite, or via the internet.

To affect end-to-end automation of a full-system evaluation of a GC/GC-MS instrument, injection of the material sample is only one portion of the process which may be automated. With reference to FIG. 2, one system and method to automate this process is to utilize an autosampler (or "automatic sampler"). Autosamplers are devices able to perform a predetermined sequence of operations on a number of samples to be analyzed, contained in special containers, in order to feed these samples to a certain instrument according to the conditions set for carrying out the analysis. Typically, automatic samplers are equipped with a syringe for taking a sample from the associated container and injecting the treated sample in an input port of a chromatographic analysis instrument. The possible unambiguous identification of the sample to be analyzed can be carried out by reading a bar code, radio-frequency identification (RFID), or via another system of identification provided on/in the associated container. For this reason, the samplers can be equipped with a special module for reading bar codes, or another system of identification. Traditional automatic samplers can provide for the treatment of samples to be analyzed through the use of reagents stored in special tanks. Furthermore, the manufacture of automatic samplers equipped with stations for washing the syringes with solvents is known.

FIG. 2 is a cross-sectional view of a first exemplary injector arrangement 200 of a GC/GC-MS instrument to be utilized by an autosampler. As shown, one vial position 202 can be dedicated to holding the diagnostic material sample (or "test mix standard") 204, while the remainder of the vial positions 206 can be dedicated to holding other, non diagnostic material samples. As such, once a system evaluation procedure is initiated, controller 136 can direct an injector 208 to navigate to the diagnostic vial position 202 to retrieve diagnostic material sample 204 to inject it into injector port 106.

One potential limitation is that traditional vials 214 and septa 210, once punctured, can sometimes allow for the material sample to gradually evaporate, thereby changing the concentration of the material contained within them over time. As such, in some versions, the autosampler may be configured to contain an improved vial 216 designed to hold the diagnostic material sample 204, where instead of a septum 210, a specialized lid 212 opens for the sample extraction, and then reseals when not in use. As such, the improved vial 216 would therefore be capable of preserving a larger volume of diagnostic material samples 204 and for a much longer period of time than standard or traditional vials 214.

With reference to FIG. 3, an alternative system and method to automate the full system evaluation process utilizes a diagnostic material injection system 300 that is attached directly to an inlet 302 of an injector 304. As such, rather than utilizing an autosampler, a specified amount of diagnostic material sample 306 could be held in a fluid reservoir 308 before being directly injected through a tube 314 into a gas chromatograph liner 312 via a controlled injector 316 operable similar to a fuel injector or inkjet nozzle. For example, injection system 300 can include one or more electronic controlled valves 310 operable by controller 136, and in some versions, one or more piezoelectric elements 322 actuatable by controller 136 to push diagnostic material sample 306 through tube 314. Using this injection system 300, a small amount of diagnostic material sample 306 (approximately 1 µL, in some versions) would be injected through the heated housing 318 of the oven toward the column 320 by bringing the injection nozzle close to the top of the inlet 302 without significantly heating the fuel injector or inkjet-like device or the diagnostic material sample that is inside.

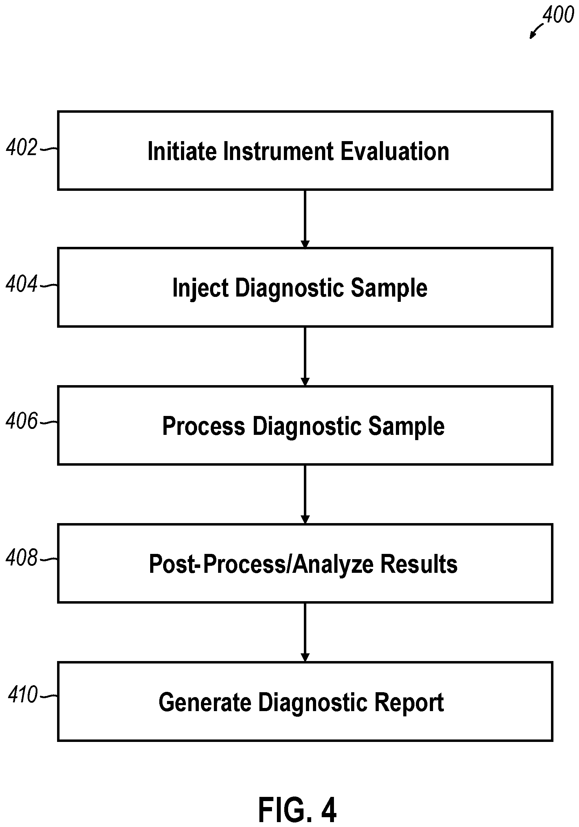

With reference to FIG. 4, an end-to-end method 400 of performing a full system evaluation is illustrated. At step 402, the system evaluation is initiated, whether by a user physically activating the evaluation locally at the GC/GC-MS instrument system, by a user activating it from a remote location, or by a pre-determined software schedule. Once activated, at step 404, a diagnostic material sample is autonomously injected into the GC/GC-MS instrument system utilizing any of the above-described techniques or via any other techniques whether known in the art or later developed.

Thereafter, at step 406, a method is optimized to analyze the diagnostic material sample. This method may be stored locally or in the cloud by the instrument and it may be automatically modified by the controller based on various configuration parameters, such as the type of column that is currently installed (e.g., depending on the length, inner diameter, outer diameter, stationary phase thickness, etc.), the type of GC or MS instrument that is configured (e.g., a single quadrupole, triple quadrupole, Orbitrap, etc.), and the GC inlet that is being used. Based on the column phase, a plurality of different diagnostic material samples may be readily available for retrieval by the instrument system to properly evaluate the system in its current configuration. As such, the controller is configured to initiate and direct an evaluation of the health of the instrument system in a controlled fashion, rather than to evaluate a specific application using the instrument system. It should be understood that, in some versions, configuration parameters may be stored nearby or on a surface of the container holding the diagnostic material, and which the configuration parameters are readable (e.g., using RFID or other similar techniques) by the instrument prior to initiation of the scientific analysis.

In addition to utilizing the diagnostic material sample for diagnosing the GC instrument health, the controller may also activate the calibration gas at the end of the GC analysis run for assessing additional aspects of MS health. For instance, with the calibration gas, SIM/SRM isolation and efficiency could be quickly determined as well. As such, one embodiment of the methods described herein would be to strictly evaluate GC and chromatography health, while a second embodiment could also encompass MS health and tuning.

At step 408, post processing software (which may be configured to operate on the embedded instrument firmware, such as within the data processor 134 or the controller 136) would analyze the raw data sets as detected by the GC column 112 or the MS detector 124. For instance, with regard to the GC column 112, post-processing and analysis of the data set could review the mass traces that are representative of the test compounds. Various chromatographic information can be gathered from this such as, but not limited to, the retention time of compounds, peak tailing, peak shape, peak areas, column bleed level changes during the oven ramp, other chromatographic characteristics, ion ratios (MS), or mass accuracy (MS). The post processing software may be configured to analyze and compare the raw data sets with one or more data sets stored within the memory, such as an ideal data set, including an output data set for the analyzed diagnostic material that would be expected under normal operating conditions by a healthy instrument. In other versions, the software may be configured to analyze and compare the raw data sets with a data set stored from a prior scientific analysis of the same or a similar diagnostic material, or from an online storage database.

With regard to the MS detector 124, post-processing and analysis of the data set using the calibration gas portion could provide several other useful metrics for evaluating MS health. This type of evaluation can be performed after the retention time of the last compound and during the oven cool down period, and can provide data to analyze ion intensities, ion ratios, mass accuracy, air or water levels (with calibration gas on or off), leak check percentage, SIM/SRM isolation efficiency, collision energy evaluations, rapid tuning to see if other ion optic values may be more suitable (continuous tuning), or other useful data.

At step 410, after the data are analyzed and optionally compared to previous trends, a report can be generated. In some versions, the report may be displayed to the user via the display screen 144 while in other versions, the report may be stored locally or in a cloud-based server for TCP/IP based for remote viewing, or transmitted to a remote user through the internet via hard wiring or transmitter 146. The output report may be configured to summarize the results and highlight or recommend which, if any, maintenance actions might be required (e.g., directing a user to trim the column, replace the liner, recalibrate the instrument, etc.). If tuning or recalibration is required, this can be triggered automatically by the instrument system to be completed. In other alternative versions, if the GC/GC-MS instrument system is connected in an IoT (Internet of Things) framework, a push notification can be generated to mobile devices and to the data system.

It is to be understood that features described with regard to the various embodiments herein may be mixed and matched in any combination without departing from the scope of the disclosure. Although different selected embodiments have been illustrated and described in detail, it is to be appreciated that they are exemplary, and that a variety of substitutions and alterations are possible without departing from the scope of the present disclosure.

## Claims

1. A scientific instrument (100), comprising:
a material analysis chamber (200) having an input port (106);
an injector (208, 304) configured to insert one material sample from a plurality of material samples into the material analysis chamber (200) via the input port (106), wherein the material analysis chamber (200) is configured to perform a scientific analysis of the inserted material sample, wherein the plurality of material samples includes at least one diagnostic material sample (204, 306);
a data processor (134) having a memory (148) storing correlation data for comparing a first set of results of a first scientific analysis to expected results associated with the at least one diagnostic material sample (204) to form a first set of compared results, wherein the data processor (134) is further configured to selectively generate an output report of the first set of compared results; and
a controller (136) operatively coupled with the material analysis chamber (200), and the injector (208, 304), and the data processor (134), wherein the controller (136) is configured to receive a first command via a user input feature (138), **characterized in that**, upon receiving the first command at the user input feature (138), the controller (136) is configured to autonomously initiate and direct an evaluation of the health of the scientific instrument by:
directing the injector (208, 304) to inject at least one diagnostic material sample (204) that is formulated to test different aspects of chromatography into the material analysis chamber (200),
initiating the scientific analysis to formulate the first set of results,
directing the data processor (134) to analyze the first set of results and to generate the first set of compared results, and
directing the data processor (134) to generate a first output report illustrating the first set of compared results indicative of the health of the scientific instrument.

2. The scientific instrument (100) of claim 1, wherein the data processor (134) is further configured to selectively generate instrument maintenance recommendations upon generating the first set of compared results, preferably the data processor (134) is configured to include the instrument maintenance recommendations into the output report.

3. The scientific instrument (100) of any of the preceding claims, wherein the data processor (134) is configured to store the first set of results into the memory (148).

4. The scientific instrument (100) of claim 3, wherein the controller (136) is configured to receive a second command via a user input feature (138) subsequent to directing the data processor (134) to generate the output report of the first set of compared results, wherein upon receiving the second command at the user input feature (138), the controller (136) is configured to:
direct the injector (208, 304) to retrieve a second material sample from the at least one diagnostic material sample (204) and to inject the second material sample into the material analysis chamber (200),
initiate the scientific analysis to formulate a second set of results,
direct the data processor (134) to analyze the second set of results and to generate a second set of compared results, wherein the second set of compared results includes a correlation between the second set of results and the first set of results, and
direct the data processor (134) to generate a second output report illustrating the second set of compared results.

5. The scientific instrument (100) of any of the preceding claims, further including an autosampler having a plurality of positions (202, 206) each shaped to receive a container (216) filled with one material sample, wherein the plurality of positions (202,206) includes at least one position (202) dedicated to the at least one diagnostic material sample (204).

6. The scientific instrument (100) of any of the preceding claims, further comprising a fluid reservoir (308) coupled with the injector (304) via a tube (314), wherein the tube (314) includes at least one electronic controlled valve (310) operable by the controller (136), wherein the at least one diagnostic material sample (204) is contained in the fluid reservoir (308).

7. The scientific instrument (100) of any of the preceding claims, further comprising a visualization display screen (144), wherein the controller (136) is further configured to display the output report of the first set of compared results to a user via the visualization display screen (144).

8. The scientific instrument (100) of any of the preceding claims, further comprising a wireless transmitter (146), wherein the controller (136) is further configured to transmit a portion of the output report of the first set of compared results to a user device via the wireless transmitter (136).

9. The scientific instrument (100) of any of the preceding claims, wherein the expected results include at least one of an ideal set of results and a prior set of scientific analysis results.

10. A method of performing a diagnostic evaluation of a scientific instrument (100), wherein the scientific instrument (100) includes a material analysis chamber (200) having an input port (106), an injector (208,304) configured to selectively retrieve material samples from a plurality of material samples and insert the retrieved material sample into the material analysis chamber (200) via the input port (106), at least one diagnostic material sample (204), a data processor (134), and a controller (136) operatively coupled with the material analysis chamber (200), and the injector (208, 304), and the data processor (134), wherein the controller (136) is configured to receive a first command via a user input feature (138), the method comprising:
upon receiving the first command at the user input feature (138), directing the injector (208, 304) via the controller (136) to retrieve a first material sample from the at least one diagnostic material sample (204) and to inject the at least one diagnostic material sample (204) into the material analysis chamber (200),
**characterized in that** the at least one diagnostic material sample (204) is formulated to test different aspects of chromatography and further wherein the material analysis chamber (200) is configured to perform a scientific analysis of the retrieved material sample;
initiating a first scientific analysis to formulate a first set of results, wherein the data processor (134) includes a memory (148) storing correlation data for comparing the first set of results of the scientific analysis to expected results associated with the at least one diagnostic material sample (204) to form a first set of compared results;
directing the data processor (134) via the controller (136) to analyze the first set of results and to generate the first set of compared results; and
upon generating the first set of compared results, directing the data processor (134) via the controller (136) to generate a first output report illustrating the first set of compared results and indicating the diagnostic evaluation of the scientific instrument.

11. The method of claim 10, further comprising:
storing the first set of results into the memory;
initiating a second scientific analysis to formulate a second set of results;
directing the data processor to analyze the second set of results and to generate a second set of compared results, wherein the second set of compared results includes a correlation between the second set of results and the first set of results, preferably directing the data processor to generate a second output report illustrating the second set of compared results.

12. The method of claim 10 or 11, wherein the scientific instrument (100) includes an autosampler having a plurality of positions (202, 206) each shaped to receive a container (216) filled with one material sample, the method further comprising:
positioning at least one diagnostic material sample (204) into at least one of the plurality of positions (202, 206).

13. The method of any of claims 10-12, wherein the scientific instrument (100) includes a fluid reservoir (308) fluidly coupled with the injector (304), wherein the at least one diagnostic material sample (204) is contained in the fluid reservoir (308) and selectively released to the injector (304) via a valve (310) operable by the controller (136), wherein directing the injector (304) via the controller (136) to retrieve a first material sample from the at least one diagnostic material sample (204) includes:
opening the valve (310) via the controller (136) to deliver the at least one diagnostic material sample (204) into the injector (304).

14. The method of any of claims 10-13, wherein the scientific instrument (100) includes a fluid reservoir (308) fluidly coupled with the injector (304), wherein the at least one diagnostic material sample (204) is contained in the fluid reservoir (308) and selectively released to the injector (304) via a piezoelectric element (322) actuatable by the controller (136), wherein directing the injector (304) via the controller (136) to retrieve a first material sample from the at least one diagnostic material sample (204) includes:
actuating the piezoelectric element (322) to deliver the at least one diagnostic material sample (204) into the injector (304).

15. The method of any of claims 10-14, wherein prior to initiating a first scientific analysis to formulate a first set of results, the method further comprises:
adjusting configuration parameters of the scientific instrument (100) based upon at least one of a type of column that is currently installed or a type of scientific instrument being used.

16. The method of claim 15, wherein the first material sample includes an RFID tag, wherein adjusting configuration parameters of the scientific instrument (100) includes:
scanning the RFID tag to receive data indicative of the at least one of the type of column that is currently installed or the type of scientific instrument being used.

## Patentansprüche

1. Wissenschaftliches Instrument (100), umfassend:
eine Materialanalysekammer (200) mit einem Eingangsanschluss (106);
einen Injektor (208, 304), der so konfiguriert ist, dass er eine Materialprobe von einer Vielzahl von Materialproben über den Eingangsanschluss (106) in die Materialanalysekammer (200) einführt, wobei die Materialanalysekammer (200) so konfiguriert ist, dass sie eine wissenschaftliche Analyse der eingeführten Materialprobe durchführt, wobei die Vielzahl von Materialproben mindestens eine diagnostische Materialprobe (204, 306) einschließt;
einen Datenprozessor (134) mit einem Speicher (148), der Korrelationsdaten zum Vergleichen eines ersten Satzes von Ergebnissen einer ersten wissenschaftlichen Analyse mit erwarteten Ergebnissen speichert, die der mindestens einen diagnostischen Materialprobe (204) zugeordnet sind, um einen ersten Satz von Vergleichsergebnissen zu bilden, wobei der Datenprozessor (134) ferner so konfiguriert ist, dass er selektiv einen Ausgabebericht des ersten Satzes von Vergleichsergebnissen generiert; und
eine Steuerung (136), die funktional mit der Materialanalysekammer (200), dem Injektor (208, 304) und dem Datenprozessor (134) gekoppelt ist, wobei die Steuerung (136) so konfiguriert ist, dass sie einen ersten Befehl über ein Benutzereingabemerkmal (138) empfängt, **dadurch gekennzeichnet, dass** die Steuerung (136) nach dem Empfangen des ersten Befehls an dem Benutzereingabemerkmal (138) so konfiguriert ist, dass sie eine Bewertung des Zustands des wissenschaftlichen Instruments autonom einleitet und anweist, indem sie:
den Injektor (208, 304) anweist, mindestens eine diagnostische Materialprobe (204), die zum Testen verschiedener Aspekte einer Chromatographie formuliert ist, in die Materialanalysekammer (200) zu injizieren,
die wissenschaftliche Analyse einleitet, um den ersten Satz von Ergebnissen zu formulieren,
den Datenprozessor (134) anweist, den ersten Satz von Ergebnissen zu analysieren und den ersten Satz von Vergleichsergebnissen zu generieren, und
den Datenprozessor (134) anweist, einen ersten Ausgabebericht zu generieren, der den ersten Satz von Vergleichsergebnissen veranschaulicht, die den Zustand des wissenschaftlichen Instruments angeben.

2. Wissenschaftliches Instrument (100) nach Anspruch 1, wobei der Datenprozessor (134) ferner so konfiguriert ist, dass er nach dem Generieren des ersten Satzes von Vergleichsergebnissen selektiv Empfehlungen zur Instrumentenwartung generiert, wobei der Datenprozessor (134) vorzugsweise so konfiguriert ist, dass er die Empfehlungen zur Instrumentenwartung in den Ausgabebericht einschließt.

3. Wissenschaftliches Instrument (100) nach einem der vorstehenden Ansprüche, wobei der Datenprozessor (134) so konfiguriert ist, dass er den ersten Satz von Ergebnissen in dem Speicher (148) speichert.

4. Wissenschaftliches Instrument (100) nach Anspruch 3, wobei die Steuerung (136) so konfiguriert ist, dass sie anschließend an das Anweisen des Datenprozessors (134), den Ausgabebericht des ersten Satzes von Vergleichsergebnissen zu generieren, einen zweiten Befehl über ein Benutzereingabemerkmal (138) empfängt, wobei die Steuerung (136) nach dem Empfangen des zweiten Befehls an dem Benutzereingabemerkmal (138) so konfiguriert ist, dass sie:
den Injektor (208, 304) anweist, eine zweite Materialprobe von der mindestens einen diagnostischen Materialprobe (204) zu entnehmen und die zweite Materialprobe in die Materialanalysekammer (200) zu injizieren,
die wissenschaftliche Analyse einleitet, um einen zweiten Satz von Ergebnissen zu formulieren,
den Datenprozessor (134) anweist, den zweiten Satz von Ergebnissen zu analysieren und einen zweiten Satz von Vergleichsergebnissen zu generieren, wobei der zweite Satz von Vergleichsergebnissen eine Korrelation zwischen dem zweiten Satz von Ergebnissen und dem ersten Satz von Ergebnissen einschließt, und
den Datenprozessor (134) anweist, einen zweiten Ausgabebericht zu generieren, der den zweiten Satz von Vergleichsergebnissen veranschaulicht.

5. Wissenschaftliches Instrument (100) nach einem der vorstehenden Ansprüche, das ferner einen Autosampler mit einer Vielzahl von Positionen (202, 206) einschließt, die jeweils so geformt sind, dass sie einen Behälter (216) aufnehmen können, der mit einer Materialprobe gefüllt ist, wobei die Vielzahl von Positionen (202, 206) mindestens eine Position (202) einschließt, die für die mindestens eine diagnostische Materialprobe (204) bestimmt ist.

6. Wissenschaftliches Instrument (100) nach einem der vorstehenden Ansprüche, das ferner einen Fluidbehälter (308) umfasst, der über einen Schlauch (314) mit dem Injektor (304) gekoppelt ist, wobei der Schlauch (314) mindestens ein elektronisch gesteuertes Ventil (310) einschließt, das durch die Steuerung (136) bedienbar ist, wobei die mindestens eine diagnostische Materialprobe (204) in dem Fluidbehälter (308) enthalten ist.

7. Wissenschaftliches Instrument (100) nach einem der vorstehenden Ansprüche, das ferner einen Visualisierungsanzeigebildschirm (144) umfasst, wobei die Steuerung (136) ferner so konfiguriert ist, dass sie den Ausgabebericht des ersten Satzes von Vergleichsergebnissen einem Benutzer über den Visualisierungsanzeigebildschirm (144) anzeigt.

8. Wissenschaftliches Instrument (100) nach einem der vorstehenden Ansprüche, das ferner einen drahtlosen Sender (146) umfasst, wobei die Steuerung (136) ferner so konfiguriert ist, dass sie einen Abschnitt des Ausgabeberichts des ersten Satzes von Vergleichsergebnissen über den drahtlosen Sender (136) an eine Benutzervorrichtung überträgt.

9. Wissenschaftliches Instrument (100) nach einem der vorstehenden Ansprüche, wobei die erwarteten Ergebnisse mindestens eines von einem idealen Satz von Ergebnissen und einem früheren Satz von wissenschaftlichen Analyseergebnissen einschließen.

10. Verfahren zum Durchführen einer diagnostischen Bewertung eines wissenschaftlichen Instruments (100), wobei das wissenschaftliche Instrument (100) eine Materialanalysekammer (200) mit einem Eingangsanschluss (106), einen Injektor (208, 304), der so konfiguriert ist, dass er selektiv Materialproben von einer Vielzahl von Materialproben entnimmt und die entnommene Materialprobe über den Eingangsanschluss (106) in die Materialanalysekammer (200) einführt, mindestens eine diagnostische Materialprobe (204), einen Datenprozessor (134) und eine Steuerung (136), die funktional mit der Materialanalysekammer (200), dem Injektor (208, 304) und dem Datenprozessor (134) gekoppelt ist, wobei die Steuerung (136) so konfiguriert ist, dass sie einen ersten Befehl über ein Benutzereingabemerkmal (138) empfängt, einschließt, wobei das Verfahren umfasst:
nach dem Empfangen des ersten Befehls an dem Benutzereingabemerkmal (138), Anweisen des Injektors (208, 304) über die Steuerung (136), eine erste Materialprobe von der mindestens einen diagnostischen Materialprobe (204) zu entnehmen und die mindestens eine diagnostische Materialprobe (204) in die Materialanalysekammer (200) zu injizieren,
**dadurch gekennzeichnet, dass** die mindestens eine diagnostische Materialprobe (204) so formuliert ist, dass sie verschiedene Aspekte einer Chromatographie testet, und wobei die Materialanalysekammer (200) ferner so konfiguriert ist, dass sie eine wissenschaftliche Analyse der entnommenen Materialprobe durchführt;
Einleiten einer ersten wissenschaftlichen Analyse, um einen ersten Satz von Ergebnissen zu formulieren, wobei der Datenprozessor (134) einen Speicher (148) einschließt, der Korrelationsdaten zum Vergleichen des ersten Satzes von Ergebnissen der wissenschaftlichen Analyse mit erwarteten Ergebnissen, die der mindestens einen diagnostischen Materialprobe (204) zugeordnet sind, speichert, um einen ersten Satz von Vergleichsergebnissen zu bilden;
Anweisen des Datenprozessors (134) über die Steuerung (136), den ersten Satz von Ergebnissen zu analysieren und den ersten Satz von Vergleichsergebnissen zu generieren; und
nach dem Generieren des ersten Satzes von Vergleichsergebnissen, Anweisen des Datenprozessors (134) über die Steuerung (136), einen ersten Ausgabebericht zu generieren, der den ersten Satz von Vergleichsergebnissen veranschaulicht und die diagnostische Bewertung des wissenschaftlichen Instruments angibt.

11. Verfahren nach Anspruch 10, ferner umfassend:
Speichern des ersten Satzes von Ergebnissen im Speicher;
Einleiten einer zweiten wissenschaftlichen Analyse, um einen zweiten Satz von Ergebnissen zu formulieren;
Anweisen des Datenprozessors, den zweiten Satz von Ergebnissen zu analysieren und einen zweiten Satz von Vergleichsergebnissen zu generieren, wobei der zweite Satz von Vergleichsergebnissen eine Korrelation zwischen dem zweiten Satz von Ergebnissen und dem ersten Satz von Ergebnissen einschließt, vorzugsweise Anweisen des Datenprozessors, einen zweiten Ausgabebericht zu generieren, der den zweiten Satz von Vergleichsergebnissen veranschaulicht.

12. Verfahren nach Anspruch 10 oder 11, wobei das wissenschaftliche Instrument (100) einen Autosampler mit einer Vielzahl von Positionen (202, 206) einschließt, die jeweils so geformt sind, dass sie einen Behälter (216) aufnehmen, der mit einer Materialprobe gefüllt ist, wobei das Verfahren ferner umfasst:
Positionieren von mindestens einer diagnostischen Materialprobe (204) in mindestens einer der Vielzahl von Positionen (202, 206).

13. Verfahren nach einem der Ansprüche 10 bis 12, wobei das wissenschaftliche Instrument (100) einen Fluidbehälter (308) einschließt, der mit dem Injektor (304) fluidisch gekoppelt ist, wobei die mindestens eine diagnostische Materialprobe (204) in dem Fluidbehälter (308) enthalten ist und selektiv über ein durch die Steuerung (136) bedienbares Ventil (310) an den Injektor (304) freigegeben wird, wobei das Anweisen des Injektors (304) über die Steuerung (136), eine erste Materialprobe von der mindestens einen diagnostischen Materialprobe (204) zu entnehmen, einschließt:
Offnen des Ventils (310) über die Steuerung (136), um die mindestens eine diagnostische Materialprobe (204) in den Injektor (304) abzugeben.

14. Verfahren nach einem der Ansprüche 10 bis 13, wobei das wissenschaftliche Instrument (100) einen Fluidbehälter (308) einschließt, der mit dem Injektor (304) fluidisch gekoppelt ist, wobei die mindestens eine diagnostische Materialprobe (204) in dem Fluidbehälter (308) enthalten ist und selektiv über ein durch die Steuerung (136) betätigbares piezoelektrisches Element (322) an den Injektor (304) freigegeben wird, wobei das Anweisen des Injektors (304) über die Steuerung (136), eine erste Materialprobe von der mindestens einen diagnostischen Materialprobe (204) zu entnehmen, einschließt:
Betätigen des piezoelektrischen Elements (322), um die mindestens eine diagnostische Materialprobe (204) in den Injektor (304) abzugeben.

15. Verfahren nach einem der Ansprüche 10 bis 14, wobei das Verfahren vor dem Einleiten einer ersten wissenschaftlichen Analyse, um einen ersten Satz von Ergebnissen zu formulieren, ferner umfasst:
Anpassen von Konfigurationsparametern des wissenschaftlichen Instruments (100) basierend auf mindestens einem von einer Art von Säule, die aktuell installiert ist, oder einer Art von wissenschaftlichem Instrument, das verwendet wird.

16. Verfahren nach Anspruch 15, wobei die erste Materialprobe ein RFID-Tag einschließt, wobei das Anpassen von Konfigurationsparametern des wissenschaftlichen Instruments (100) einschließt:
Scannen des RFID-Tags, um Daten zu empfangen, die mindestens eines von der Art von Säule, die aktuell installiert ist, oder der Art von wissenschaftlichem Instrument, das verwendet wird, angeben.

## Revendications

1. Instrument scientifique (100) comprenant :
une chambre d'analyse des matériaux (200) ayant un orifice d'entrée (106) ;
un injecteur (208, 304) configuré pour insérer un échantillon de matériau parmi une pluralité d'échantillons de matériau dans la chambre d'analyse des matériaux (200) par l'intermédiaire de l'orifice d'entrée (106), dans lequel la chambre d'analyse des matériaux (200) est configurée pour effectuer une analyse scientifique de l'échantillon de matériau inséré, dans lequel la pluralité d'échantillons de matériau comporte au moins un échantillon de matériau de diagnostic (204, 306) ;
un processeur de données (134) doté d'une mémoire (148) stockant des données de corrélation pour comparer une première série de résultats d'une première analyse scientifique aux résultats attendus associés à l'au moins un échantillon de matériau de diagnostic (204) pour former une première série de résultats comparés, dans lequel le processeur de données (134) est en outre configuré pour générer sélectivement un rapport de sortie de la première série de résultats comparés ; et
un contrôleur (136) couplé de manière opérationnelle à la chambre d'analyse des matériaux (200), à l'injecteur (208, 304) et au processeur de données (134), dans lequel le contrôleur (136) est configuré pour recevoir une première commande par l'intermédiaire d'une fonction d'entrée utilisateur (138), **caractérisé en ce que**, lors de la réception de la première commande à la fonction d'entrée utilisateur (138), le contrôleur (136) est configuré pour initier et diriger de manière autonome une évaluation de la santé de l'instrument scientifique en :
guidant l'injecteur (208, 304) à injecter au moins un échantillon de matériau de diagnostic (204) formulé pour tester différents aspects de la chromatographie dans la chambre d'analyse des matériaux (200),
lançant l'analyse scientifique pour formuler la première série de résultats,
guidant le processeur de données (134) à analyser la première série de résultats et générer la première série de résultats comparés, et
guidant le processeur de données (134) à générer un premier rapport de sortie illustrant la première série de résultats comparés indiquant l'état de santé de l'instrument scientifique.

2. Instrument scientifique (100) selon la revendication 1, dans lequel le processeur de données (134) est en outre configuré pour générer sélectivement des recommandations de maintenance de l'instrument lors de la génération de la première série de résultats comparés, de préférence le processeur de données (134) est configuré pour inclure les recommandations de maintenance de l'instrument dans le rapport de sortie.

3. Instrument scientifique (100) selon l'une des revendications précédentes, dans lequel le processeur de données (134) est configuré pour stocker la première série de résultats dans la mémoire (148).

4. Instrument scientifique (100) selon la revendication 3, dans lequel le contrôleur (136) est configuré pour recevoir une seconde commande par l'intermédiaire d'une caractéristique d'entrée utilisateur (138) après avoir guidé le processeur de données (134) à générer le rapport de sortie de la première série de résultats comparés, dans lequel, lors de la réception de la seconde commande à la caractéristique d'entrée utilisateur (138), le contrôleur (136) est configuré pour :
guider l'injecteur (208, 304) à récupérer un second échantillon de matériau à partir d'au moins un échantillon de matériau de diagnostic (204) et à injecter le second échantillon de matériau dans la chambre d'analyse des matériaux (200),
lancer l'analyse scientifique pour formuler une seconde série de résultats,
guider le processeur de données (134) à analyser la seconde série de résultats et à générer une seconde série de résultats comparés, dans lequel la seconde série de résultats comparés comporte une corrélation entre la seconde série de résultats et la première série de résultats, et
guider le processeur de données (134) à générer un second rapport de sortie illustrant la seconde série de résultats comparés.

5. Instrument scientifique (100) selon l'une quelconque des revendications précédentes, comportant en outre un échantillonneur automatique ayant une pluralité de positions (202, 206) chacune formée pour recevoir un récipient (216) rempli d'un échantillon de matériau, dans lequel la pluralité de positions (202, 206) comporte au moins une position (202) dédiée à l'au moins un échantillon de matériau de diagnostic (204).

6. Instrument scientifique (100) selon l'une quelconque des revendications précédentes, comprenant en outre un réservoir de fluide (308) couplé à l'injecteur (304) par l'intermédiaire d'un tube (314), dans lequel le tube (314) comporte au moins une vanne à commande électronique (310) pouvant être actionnée par le contrôleur (136), dans lequel au moins un échantillon de matériau de diagnostic (204) est contenu dans le réservoir de fluide (308).

7. Instrument scientifique (100) selon l'une quelconque des revendications précédentes, comprenant en outre un écran de visualisation (144), dans lequel le contrôleur (136) est en outre configuré pour afficher le rapport de sortie de la première série de résultats comparés à un utilisateur par l'intermédiaire de l'écran de visualisation (144).

8. Instrument scientifique (100) selon l'une quelconque des revendications précédentes, comprenant en outre un émetteur sans fil (146), dans lequel le contrôleur (136) est en outre configuré pour transmettre une partie du rapport de sortie de la première série de résultats comparés à un dispositif utilisateur par l'intermédiaire de l'émetteur sans fil (136).

9. Instrument scientifique (100) selon l'une quelconque des revendications précédentes, dans lequel les résultats attendus comportent au moins un ensemble idéal de résultats et un ensemble antérieur de résultats d'analyse scientifique.

10. Procédé de réalisation d'une évaluation diagnostique d'un instrument scientifique (100), dans lequel l'instrument scientifique (100) comporte une chambre d'analyse des matériaux (200) ayant un orifice d'entrée (106), un injecteur (208, 304) configuré pour récupérer sélectivement des échantillons de matériaux parmi une pluralité d'échantillons de matériaux et insérer l'échantillon de matériaux récupéré dans la chambre d'analyse des matériaux (200) par l'intermédiaire de l'orifice d'entrée (106), au moins un échantillon de matériau de diagnostic (204), un processeur de données (134) et un contrôleur (136) couplé de manière opérationnelle à la chambre d'analyse des matériaux (200), à l'injecteur (208, 304) et au processeur de données (134), dans lequel le contrôleur (136) est configuré pour recevoir une première commande par l'intermédiaire d'une fonction d'entrée utilisateur (138), le procédé comprenant :
lors de la réception de la première commande au niveau de la caractéristique d'entrée utilisateur (138), guider l'injecteur (208, 304) par l'intermédiaire du contrôleur (136) pour récupérer un premier échantillon de matériau de l'au moins un échantillon de matériau de diagnostic (204) et pour injecter l'au moins un échantillon de matériau de diagnostic (204) dans la chambre d'analyse des matériaux (200),
**caractérisé en ce que** l'au moins un échantillon de matériau de diagnostic (204) est formulé pour tester différents aspects de la chromatographie et en outre dans lequel la chambre d'analyse des matériaux (200) est configurée pour effectuer une analyse scientifique de l'échantillon de matériau récupéré ;
le lancement d'une première analyse scientifique pour formuler une première série de résultats, dans lequel le processeur de données (134) comporte une mémoire (148) stockant des données de corrélation pour comparer la première série de résultats de l'analyse scientifique aux résultats attendus associés à l'au moins un échantillon de matériau de diagnostic (204) pour former une première série de résultats comparés ;
guider le processeur de données (134), par l'intermédiaire du contrôleur (136), à analyser la première série de résultats et à générer la première série de résultats comparés ; et
lors de la génération de la première série de résultats comparés, guider le processeur de données (134), par l'intermédiaire du contrôleur (136), à générer un premier rapport de sortie illustrant la première série de résultats comparés et indiquant l'évaluation diagnostique de l'instrument scientifique.

11. Procédé selon la revendication 10, comprenant en outre :
le stockage de la première série de résultats dans la mémoire ;
le lancement d'une seconde analyse scientifique pour formuler une seconde série de résultats ;
le guidage du processeur de données à analyser la seconde série de résultats et à générer une seconde série de résultats comparés, dans lequel la seconde série de résultats comparés comporte une corrélation entre la seconde série de résultats et la première série de résultats, et de préférence le guidage du processeur de données à générer un second rapport de sortie illustrant la seconde série de résultats comparés.

12. Procédé selon la revendication 10 ou 11, dans lequel l'instrument scientifique (100) comporte un échantillonneur automatique ayant une pluralité de positions (202, 206) chacune formée pour recevoir un conteneur (216) rempli d'un échantillon de matériau, le procédé comprenant en outre :
le positionnement d'au moins un échantillon de matériau de diagnostic (204) dans au moins une des pluralités de positions (202, 206).

13. Procédé selon l'une quelconque des revendications 10 à 12, dans lequel l'instrument scientifique (100) comporte un réservoir de fluide (308) couplé fluidiquement à l'injecteur (304), dans lequel l'au moins un échantillon de matériau de diagnostic (204) est contenu dans le réservoir de fluide (308) et libéré sélectivement à l'injecteur (304) par l'intermédiaire d'une vanne (310) actionnable par le contrôleur (136), dans lequel guider l'injecteur (304) par l'intermédiaire du contrôleur (136) à récupérer un premier échantillon de matériau à partir de l'au moins un échantillon de matériau de diagnostic (204) comporte :
l'ouverture de la vanne (310) par l'intermédiaire du contrôleur (136) pour délivrer l'au moins un échantillon de matériau de diagnostic (204) dans l'injecteur (304).

14. Procédé selon l'une quelconque des revendications 10 à 13, dans lequel l'instrument scientifique (100) comporte un réservoir de fluide (308) couplé fluidiquement à l'injecteur (304), dans lequel l'au moins un échantillon de matériau de diagnostic (204) est contenu dans le réservoir de fluide (308) et libéré sélectivement à l'injecteur (304) par l'intermédiaire d'un élément piézoélectrique (322) actionnable par le contrôleur (136), dans lequel guider l'injecteur (304) par l'intermédiaire du contrôleur (136) à récupérer un premier échantillon de matériau à partir de l'au moins un échantillon de matériau de diagnostic (204) comporte :
l'actionnement de l'élément piézoélectrique (322) pour délivrer l'au moins un échantillon de matériau de diagnostic (204) dans l'injecteur (304).

15. Procédé selon l'une quelconque des revendications 10 à 14, dans lequel, avant de lancer une première analyse scientifique pour formuler une première série de résultats, le procédé comprend en outre :
l'ajustement des paramètres de configuration de l'instrument scientifique (100) en fonction de l'au moins un type de colonne actuellement installée ou d'un type d'instrument scientifique utilisé.

16. Procédé selon la revendication 15, dans lequel le premier échantillon de matériau comporte une étiquette RFID, dans lequel l'ajustement des paramètres de configuration de l'instrument scientifique (100) comporte :
le balayage de l'étiquette RFID pour recevoir des données indiquant au moins l'un parmi : le type de colonne actuellement installé ou le type d'instrument scientifique utilisé.
